# DEMANDE DE BREVET EUROPEEN

(11) **EP 2 068 168 A1**
(43) Date de publication de la demande: **10.06.2009**
(21) Numéro de dépôt: 07122242.6
(22) Date de dépôt: 04.12.2007
(51) Int. Cl.: G01S 1/00

(54) **Procédé de détermination d'une position d'un récepteur de signaux radiofréquences basse puissance**

(71) Demandeur: The Swatch Group Research and Development Ltd., 2074 Marin (CH)
(72) Inventeur: Etienne, Jean-Daniel, 2206 Les Geneveys-sur-Coffrane (CH); Oesch, Yves, 2000 Neuchâtel (CH)
(74) Mandataire: Couillard, Yann Luc Raymond

(57) **Abrégé**

Pour le procédé de détermination d'une position d'un récepteur de signaux radiofréquences (1), le récepteur comprend des moyens de réception et de mise en forme des signaux radiofréquences (3) provenant de satellites, un étage de corrélation (7) et des moyens à microprocesseur (12). Des signaux intermédiaires (IF) convertis en fréquence dans les moyens de mise en forme sont fournis à plusieurs canaux (7') de l'étage de corrélation (7) pour les corréler avec des répliques de la fréquence porteuse et de codes spécifiques de satellites à chercher et à poursuivre. Au moins un canal de l'étage de corrélation est tout d'abord configuré pour rechercher un satellite géostationnaire SBAS. Les moyens à microprocesseur (12) peuvent fournir une consigne de calibrage de la fréquence de signaux de cadencement fournis par des oscillateurs commandés numériquement intégrés aux canaux de l'étage de corrélation, ou calibrer des signaux d'horloge (CLK, CLK16) produits par un générateur de signaux d'horloge (5), sur la base de données temporelles tirées d'un message de données SBAS. Finalement plusieurs canaux sont configurés pour rechercher d'autres satellites du type GPS pour le calcul de la position et du temps dans les moyens à microprocesseur.

## Description

L'invention concerne un procédé pour déterminer une position notamment sur Terre d'un récepteur de signaux radiofréquences basse puissance. Ledit récepteur est susceptible de capter des signaux radiofréquences provenant de satellites, tels que des satellites du type GPS ou des satellites géostationnaires du type SBAS. Pour ce faire, le récepteur comprend des moyens de réception et de mise en forme des signaux radiofréquences provenant de satellites. Ces moyens de mise en forme des signaux produisent des signaux intermédiaires convertis en fréquence pour un étage de corrélation. Cet étage de corrélation comprend N canaux de corrélation pour recevoir les signaux intermédiaires afin de les corréler avec des répliques de la fréquence porteuse et de codes spécifiques de satellites à chercher et à poursuivre. Des moyens à microprocesseur du récepteur sont reliés à l'étage de corrélation pour traiter les données tirées, après corrélation, des signaux radiofréquences, afin de calculer une position et/ou une vitesse et/ou l'heure UTC par exemple. Ces données traitées par les moyens à microprocesseur peuvent également servir à commander le fonctionnement de certaines parties du récepteur.

L'invention concerne également le récepteur de signaux radiofréquences qui convient à la mise en oeuvre du procédé.

Le récepteur de signaux radiofréquences peut donc être utilisé dans un système de navigation par satellites de type GLONASS ou GALILEO ou GPS, ou dans un système mondial de navigation par satellites GNSS. Le système de navigation peut comprendre aussi l'utilisation de satellites géostationnaires du type SBAS. Un tel système complémentaire peut être le système de renforcement à couverture étendue WAAS pour les Etats-Unis, le complément géostationnaire européen de navigation EGNOS, le système de satellites multifonctionnels des transports MSAS au Japon, ou le système de navigation augmentée GAGAN en Inde. II est prévu actuellement 13 satellites géostationnaires pour tous ces systèmes complémentaires de navigation.

Dans le cas d'un système de positionnement du type GPS, tout récepteur de signaux radiofréquences peut recevoir des signaux provenant de satellites en orbite. La distance au sol depuis le récepteur et un satellite visible peut être entre 20'000 km, lorsqu'un de ces satellites se trouve au Zénith, et 26'000 km, lorsqu'un de ces satellites se trouve en un point de la tangente avec la surface de la Terre, c'est-à-dire à l'horizon. Par comparaison, la distance au sol depuis le récepteur et un satellite géostationnaire du type SBAS accessible peut être de l'ordre de 36'000 km. Ceci peut rendre parfois difficile de capter des signaux radiofréquences d'un tel satellite SBAS, car ils sont plus faibles et avec plus de bruit.

Actuellement, une trentaine de satellites du type GPS sont placés en orbite à une distance proche de 20'200 Km au-dessus de la surface de la Terre sur 6 plans orbitaux inclinés chacun de 55° par rapport à l'équateur. Le temps mis par un satellite du type GPS pour accomplir une rotation complète en orbite pour se retrouver au même point au-dessus de la Terre est environ de 12h. La répartition des satellites en orbite permet à un récepteur du type GPS terrestre de recevoir les signaux radiofréquences en principe de quatre satellites visibles pour déterminer sa position, sa vitesse et l'heure UTC par exemple.

Pour des applications civiles, chacun de ces satellites du type GPS émet des signaux radiofréquences composés notamment d'une première fréquence porteuse à 1,57542 GHz sur laquelle sont modulés le P-code à 10,23 MHz et le C/A code PRN à 1,023 MHz propre à chaque satellite avec le message GPS à 50 Hz. Ce message GPS contient les données d'éphémérides et d'almanachs utiles notamment pour le calcul de la position en X, Y et Z, de la vitesse et de l'heure UTC.

Les satellites géostationnaires SBAS émettent également des signaux radiofréquences à fréquence porteuse égale à 1,57542 GHz sur laquelle sont modulés un code PRN propre à chaque satellite avec un message SBAS à 250 Hz. Le message SBAS comprend notamment des données très précises de temporisation et des données d'intégrité relative à l'information correcte ou erronée de tel ou tel satellite du type GPS.

Avec l'aide des signaux radiofréquences d'au moins un satellite SBAS combinés avec des signaux radiofréquences de satellites GPS captés par le récepteur, il est possible d'avoir une meilleure précision de la position calculée par rapport à la position réelle. L'erreur de la position calculée par rapport à la position réelle peut être amenée à moins de 5 m horizontalement et à moins de 20 m verticalement (hauteur).

Le C/A code PRN (pseudo random noise) de chaque satellite, qui est un code de Gold, est un code pseudo-aléatoire unique pour chaque satellite pour pouvoir différencier les signaux émis par les satellites à l'intérieur du récepteur. Le C/A code est un signal numérique qui est composé de 1023 chips, et qui se répète toutes les millisecondes. Tous les codes de Gold ont la caractéristique d'être presque orthogonaux, c'est-à-dire qu'en les corrélant l'un avec l'autre le résultat de la corrélation donne une valeur proche de 0. Cette caractéristique permet de pouvoir indépendamment traiter plusieurs signaux radiofréquences GPS ou SBAS provenant de plusieurs satellites de façon simultanée dans plusieurs canaux d'un même récepteur.

Comme il est envisagé de monter un tel récepteur de signaux radiofréquences dans des petits objets portables, tels que des téléphones cellulaires ou préférentiellement dans des montres-bracelets, toutes les opérations de calcul de la position précise doivent être facilitées. De plus, le temps de calcul doit être bien diminué afin de réduire fortement la consommation électrique durant ces opérations de calcul, étant donné que le récepteur dans de tels objets est alimenté par un accumulateur ou une batterie de petite taille. Ceci n'est pas le cas d'un récepteur de signaux radiofréquences de satellites de l'état de la technique, qui emploie généralement une unité à microcontrôleur (par exemple à 32-bit) fort consommateur en énergie électrique pour le calcul rapide en temps réel de la position, de la vitesse ou de l'heure UTC.

L'invention a donc pour but principal de pallier les inconvénients de l'art antérieur en proposant un procédé de détermination de position d'un récepteur de signaux radiofréquences qui utilise des signaux radiofréquences d'au moins un satellite géostationnaire pour faciliter les opérations de calcul et réduire la consommation électrique.

A cet effet, l'invention concerne un procédé de détermination de position d'un récepteur de signaux radiofréquences provenant de satellites cité ci-devant, qui comprend les caractéristiques définies dans la revendication indépendante 1.

Des étapes particulières du procédé de détermination de position sont définies dans les revendications dépendantes 2 à 6.

Un avantage du procédé de détermination de position du récepteur de signaux radiofréquences selon l'invention réside dans le fait qu'au moment de sa mise en fonction, il est configuré pour rechercher et poursuivre tout d'abord au moins un satellite géostationnaire SBAS. Un tel satellite géostationnaire SBAS, placé sur une orbite géosynchrone, est donc exempt de toute erreur liée à l'effet Doppler.

Grâce aux signaux radiofréquences captés provenant du satellite géostationnaire, qui comprennent des données précises de temps et de synchronisation, la fréquence de signaux de cadencement fournis par des oscillateurs commandés numériquement, qui sont intégrés aux canaux de l'étage de corrélation, peut être calibrée par une consigne fournie par les moyens à microprocesseur. II peut être aussi envisagé de calibrer directement et précisément la fréquence des signaux d'horloge d'un générateur de signaux d'horloge du récepteur. Ceci permet de réduire aussi le temps de calcul de position étant donné que la zone fréquentielle de recherche des autres satellites du type GPS est réduite, et permet de rapidement rechercher et poursuivre certains satellites GPS visibles.

Un autre avantage du procédé de détermination est que lors du fonctionnement du récepteur, une partie importante de l'algorithme (DSP) du traitement des signaux numériques est placée à l'aide d'un matériel dédicacé dans l'étage de corrélation où l'algorithme est implanté dans un contrôleur de chaque canal. Une redistribution des tâches logicielles est donc effectuée dans cet étage de corrélation. Ceci permet aux moyens à microprocesseur de ne s'occuper que de tâches de calcul notamment de position selon les messages SBAS et GPS reçus de l'étage de corrélation.

Comme il n'y a plus un transfert de données très important entre le corrélateur et les moyens à microprocesseur, un microprocesseur 8-bit uniquement dans les moyens à microprocesseur peut ainsi être utilisé. Le microprocesseur n'est donc occupé que pour des calculs à basse fréquence avec des signaux numériques entre 250 Hz à 2 Hz pour la navigation d'où une économie d'énergie.

A cet effet, l'invention concerne également un récepteur de signaux radiofréquence convenant à la mise en oeuvre du procédé, qui comprend les caractéristiques définies dans la revendication indépendante 7.

Des formes d'exécution particulière du récepteur sont définies dans les revendications dépendantes 8 à 11.

Un avantage du récepteur est qu'il permet de configurer au moins un canal de l'étage de corrélation de manière qu'il puisse rechercher et poursuivre tout d'abord un satellite géostationnaire accessible dès sa mise en fonction. La fréquence de signaux de cadencement fournis par des oscillateurs commandés numériquement, qui sont intégrés aux canaux de l'étage de corrélation, peut être calibrée par une consigne fournie par les moyens à microprocesseur sur la base de données précises de temps et de synchronisation reçues dans les signaux radiofréquences SBAS. Selon une variante de réalisation, il peut être envisagé de calibrer plutôt la fréquence des signaux d'horloge générés par le générateur de signaux d'horloge sur la base des données des signaux radiofréquences SBAS.

De plus comme les signaux radiofréquences provenant de satellites GPS et SBAS ont une fréquence porteuse identique, de mineures modifications de structure du récepteur sont nécessaires pour lui permettre de capter aussi bien des signaux radiofréquences GPS que des signaux radiofréquences SBAS. Des moyens de mémorisation doivent contenir aussi des paramètres relatifs notamment au code PRN de chaque satellite SBAS afin de pouvoir configurer au moins un canal de l'étage de corrélation.

Un autre avantage du récepteur réside dans le fait qu'un contrôleur spécifique est placé dans chaque canal de manière à pouvoir redistribuer toutes les tâches logicielles dans l'étage de corrélation. Ceci permet aux moyens à microprocesseur de ne s'occuper que de tâches de calcul notamment de position selon les messages SBAS et GPS reçus de l'étage de corrélation.

Les buts, avantages et caractéristiques du procédé de détermination d'une position d'un récepteur de signaux radiofréquences basse puissance, ainsi que du récepteur pour sa mise en oeuvre, apparaîtront mieux dans la description suivante de manière non limitative en regard du dessin sur lequel :

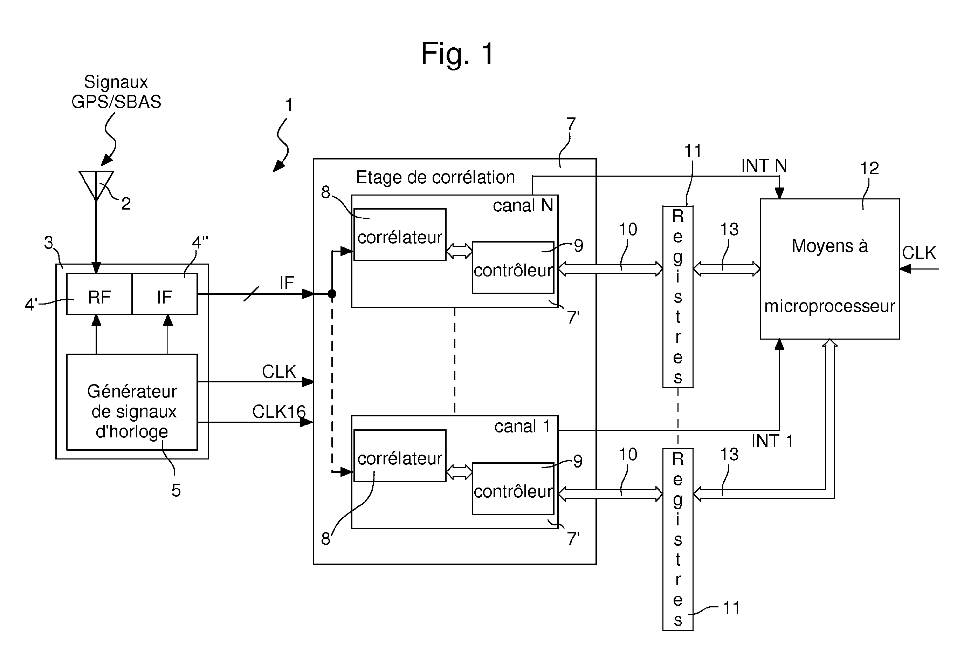

- la figure 1 représente de manière schématique l'ensemble des éléments constituant le récepteur de signaux radiofréquences basse puissance convenant à la mise en oeuvre du procédé selon l'invention.

Dans la description suivante, tous les éléments du récepteur de signaux radiofréquences qui sont bien connus de l'homme du métier dans ce domaine technique ne seront relatés que de manière simplifiée. L'accent sera principalement mis sur la manière d'obtenir rapidement et précisément une position du récepteur au moyen de données fournies dans des signaux radiofréquences provenant aussi bien d'au moins un satellite géostationnaire SBAS que de satellites du type GPS. Bien entendu, il peut être envisagé de servir un tel récepteur dans un système de navigation GLONASS ou GALILEO ou GNSS.

II est à noter que le récepteur de signaux radiofréquences basse puissance peut équiper de préférence un objet portable, tel qu'une montre-bracelet. Ainsi comme la montre possède un accumulateur ou une pile de petite taille, la puissance consommée doit être la plus faible possible, ce qui est atteint par le procédé de détermination d'une position dudit récepteur en fonction expliqué ci-après.

Ledit récepteur convenant à la mise en oeuvre du procédé de détermination d'une position est représenté schématiquement à la figure 1. Le récepteur 1 comprend principalement des moyens de réception et de mise en forme des signaux radiofréquences GPS et SBAS 3 fournis par une antenne 2 pour produire des signaux intermédiaires IF convertis en fréquence, un étage de corrélation 7 constitué de N canaux 7' pour recevoir les signaux intermédiaires IF. Un bus transfert de données 10 relie chaque canal à un registre tampon 11 respectif, et finalement un bus de données 13 relie chaque registre tampon à des moyens à microprocesseur 12 destiné notamment aux opérations de calcul de la position du récepteur 1.

Le nombre N de canaux 7' de l'étage de corrélation 7 est déterminé par exemple en fonction du nombre de satellites visibles pour le récepteur en tout point de la Terre. Le nombre N de canaux 7' est en principe égal ou supérieur à 12 canaux pour être en mesure de capter des signaux radiofréquences de satellites visibles du type GPS ou géostationnaires SBAS. II peut aussi être imaginé de ne configurer que 2 canaux pour la recherche de satellites géostationnaires, et configurer les 10 autres canaux pour la recherche de satellites du type GPS.

Conventionnellement dans les moyens de réception et de mise en forme 3, un premier circuit électronique RF 4' convertit tout d'abord les signaux radiofréquences de fréquence 1,57542 GHz en une fréquence par exemple de 24,6 MHz. Un second circuit électronique IF 4" procède par la suite à une conversion pour amener les signaux GPS ou SBAS à une fréquence par exemple de 400 kHz ou inférieure en échantillonnant à 4,03 MHz. Des signaux intermédiaires complexes IF échantillonnés et quantifiés à fréquence inférieure ou égale à 400 kHz sont ainsi fournis aux canaux 7' de l'étage de corrélation 7. Ces signaux sous forme complexe à 2 bits ou à 4 bits sont de parité différente avec une composante en phase, ainsi qu'une composante en quadrature.

Pour les opérations de conversion de fréquence, un générateur de signaux d'horloge 5 fait partie des moyens de réception et de mise en forme des signaux radiofréquences 3. Ce générateur est muni par exemple d'un oscillateur à quartz non représenté calibré initialement à une fréquence de l'ordre de 16,2 MHz. Deux signaux d'horloge CLK et CLK16 sont fournis notamment à l'étage de corrélation 7 et aux moyens à microprocesseur 12 pour cadencer toutes les opérations de ces éléments. La première fréquence d'horloge CLK peut valoir 4,03 MHz, tandis que la seconde fréquence d'horloge peut être fixée 16 fois inférieure, c'est-à-dire à 252,4 kHz. Cette seconde fréquence d'horloge est utilisée pour une grande partie de l'étage de corrélation afin de gagner en consommation d'énergie.

Bien entendu dans les moyens de réception et de mise en forme 3, il aurait également pu être imaginé d'opérer une première conversion de fréquence à 179 MHz par le premier circuit électronique 4'. Cette première conversion pourrait être suivie par une double conversion de fréquence à 4,76 MHz et à 400 kHz par le second circuit électronique 4" avec un oscillateur à quartz calibré à 17,6 MHz par exemple.

Comme expliqué par la suite au début de la mise en fonction du récepteur, au moins un canal 7' peut être configuré par les moyens à microprocesseur 12 pour chercher tout d'abord un satellite géostationnaire SBAS. Cependant, tous les canaux 7' peuvent aussi être configurés selon une variante de réalisation pour rechercher en même temps un même satellite géostationnaire ou plusieurs satellites géostationnaires SBAS. Les données SBAS tirées des signaux radiofréquences du ou des satellites géostationnaires acquis par le ou les canaux en fonction permettent de tirer précisément des données temporelles ou de synchronisation, des données de corrections ionosphériques et des données d'intégrité de satellites du type GPS.

Grâce aux données de temps du message SBAS, des oscillateurs commandés numériquement intégrés aux canaux de l'étage de corrélation peuvent être calibrés en fréquence par une consigne fournie dans un registre 11 par les moyens à microprocesseur 12. Il peut aussi être envisagé de calibrer l'oscillateur du générateur de signaux d'horloge 5 par les moyens à microprocesseur 12. Une fois l'opération de calibrage effectuée, le ou les mêmes canaux ou d'autres canaux 7' peuvent être configurés pour opérer une recherche et une poursuite d'autres satellites visibles notamment du type GPS. L'opération de recherche et poursuite d'autres satellites GPS avec le ou les oscillateurs calibrés, est ainsi fortement simplifiée, étant donné que cela restreint la zone fréquentielle de recherche des autres satellites avec uniquement l'erreur liée à l'effet Doppler à résoudre. Une réduction de consommation est ainsi obtenue.

Pour calibrer l'oscillateur dans le générateur de signaux d'horloge 5, il peut être imaginé de varier la valeur d'au moins un condensateur relié directement à un résonateur à quartz traditionnel dans un montage conventionnel. L'oscillateur peut fournir de ce fait un signal de référence dont la fréquence est adaptée afin de modifier la fréquence des signaux d'horloge produits par le générateur. Ces signaux d'horloge permettent d'adapter aussi la fréquence des signaux de conversion pour permettre d'opérer la conversion de fréquence des signaux radiofréquences reçus dans les premier et second circuits électroniques 4' et 4".

Le registre 11 pour chaque canal respectif est susceptible de recevoir des données ou des paramètres de configuration provenant des moyens à microprocesseur 12 ou d'une mémoire qui lui est associée pour le canal de corrélation 7'. De plus, le registre 11 de chaque canal en fonction est susceptible de transmettre des données concernant les messages SBAS ou GPS, l'état du code PRN, l'incrément de fréquence relatif à l'effet Doppler, les pseudo-distances et autres données après la corrélation et le verrouillage sur un satellite spécifique.

Les registres tampons 11 sont composés de plusieurs sortes de registres qui sont par exemple les registres de commande et d'états, les registres pour les oscillateurs commandés numériquement (NCO) intégrés aux corrélateurs des canaux, les registres de pseudo-distances, les registres d'énergie, les registres d'écart et d'incrément de la porteuse et du code et des registres de test. Dans une variante de réalisation, un unique bloc de registres 11 peut être envisagé pour tous les canaux 7' de l'étage de corrélation, étant donné que certaines données placées dans le bloc de registres sont communes à chaque canal.

Les moyens à microprocesseur 12 comprennent de préférence un microprocesseur 8-bit CoolRISC-816 de EM Microelectronic-Marin SA en Suisse. Ce microprocesseur peut être cadencé par un signal d'horloge CLK à 4,03 MHz. Les moyens à microprocesseur 12 comprennent également des moyens de mémorisation non représentés. Dans ces moyens de mémorisation, toutes les informations concernant la position desdits satellites GPS et SBAS, leur C/A code PRN, et ceux qui sont susceptibles d'être visibles par le récepteur terrestre, sont enregistrées.

Chaque canal 7' de l'étage de corrélation 7 comprend un corrélateur 8 et un contrôleur 9 destiné à mettre en fonction par un matériel dédicacé notamment l'algorithme de traitement des signaux pour l'acquisition du signal du satellite et la poursuite du satellite détecté par le canal. Le corrélateur est identique dans chaque canal, mais peut être configuré différemment en fonction du satellite du type GPS ou géostationnaire SBAS à rechercher et à poursuivre. Peu de modifications de fonctionnement de chaque canal sont à effectuer pour le configurer pour une recherche d'un satellite géostationnaire SBAS plutôt qu'un satellite GPS. Ce n'est qu'au niveau des boucles d'asservissement de la fréquence porteuse et du code PRN de chaque corrélateur, que la largeur de bande doit être adéquate de manière à fournir un message SBAS à 250 Hz, alors que le message GPS est à 50 Hz. Les oscillateurs commandés numériquement intégrés aux canaux 7' de l'étage de corrélation 7 peuvent être calibrés en fréquence par une consigne de calibrage fournie par les moyens à microprocesseur dans un registre 11 sur la base de données temporelles tirées d'un message de données SBAS.

Pour être sûr d'avoir bien trouvé un satellite, le cycle de corrélation et d'intégration dans chaque canal en fonction doit se répéter plusieurs fois, par exemple 16 fois pour un satellite GPS. Le nombre de cycles est quelque peu différent dans le cas de signaux radiofréquences captés d'un satellite géostationnaire SBAS par rapport à ceux captés d'un satellite du type GPS.

Le contrôleur 9 de chaque canal comprend entre autre une unité à mémoires, une unité arithmétique, une unité de synchronisation des bits de données, une unité de commande du corrélateur et une unité d'interruption non visibles sur la figure 1. L'unité à mémoires est composée notamment d'une mémoire RAM pour enregistrer des données momentanées. La mémoire RAM est répartie dans une structure non régulière ou régulière. L'unité arithmétique réalise notamment des opérations d'addition, de soustraction, de multiplication, d'accumulation et de décalage.

Toutes les tâches d'acquisition et de poursuite des satellites détectés peuvent donc être réalisées de manière autonome dans chaque canal respectif de l'étage de corrélation dans une architecture à bits parallèles où le calcul de plusieurs bits est réalisé en une impulsion d'horloge. Lorsqu'un canal a verrouillé sur un satellite, le circuit synchronise le flux de données GPS ou SBAS destiné aux calculs subséquents.

Le transfert de données avec les moyens à microprocesseur 12 ne se fait plus pendant toutes les étapes de corrélation. Ce n'est que le résultat de la corrélation de chaque canal 7' de l'étage de corrélation 7 qui est transféré aux moyens à microprocesseur, en particulier les messages SBAS à une fréquence de 250 Hz et les messages GPS à une fréquence de 50 Hz. Ceci permet donc de réduire fortement la consommation électrique par rapport aux récepteurs de l'état de la technique.

Pendant toutes les procédures de recherche et de poursuite de satellites par le récepteur en fonction, les canaux 7' utilisés émettent des signaux d'interruption INT 1 à INT N à destination des moyens à microprocesseur 12. Ceci permet de l'avertir de données qu'il peut prélever. Dès la réception des signaux d'interruption, les moyens à microprocesseur 12 doivent en général parcourir tous les canaux 7' pour savoir de quel canal proviennent les données à prélever. Ces données peuvent concerner par exemple des paramètres de configuration, des messages SBAS ou GPS, l'état du code pseudo-aléatoire PRN, l'incrément de fréquence relatif à l'effet Doppler, des pseudo-distances, des modes de coupure des moyens de réception, l'état d'intégrateurs compteurs et d'autres informations.

Un unique substrat semi-conducteur peut contenir sous forme de circuit intégré une grande partie des moyens de réception et de mise en forme 3, l'étage de corrélation 7, les registres 11 et les moyens à microprocesseur 12. II peut donc être envisagé une réduction de la consommation en diminuant la taille de la technologie pour la réalisation du circuit intégré du récepteur. Une technologie CMOS de 0,5 µm voire de 0,18 µm peut être utilisée par exemple, tout en garantissant un bon fonctionnement à haute fréquence. De plus, une optimisation de l'algorithme de traitement des signaux GPS et SBAS dans l'étage de corrélation et les moyens à microprocesseur peut encore réduire la consommation du récepteur.

Il est à noter que pour des détails techniques plus précis relatifs aux éléments de chaque canal 7' de l'étage de corrélation 7 et leur fonctionnement, le lecteur peut se référer aux caractéristiques définies en relation à la figure 2 du document EP 1 170 597 ou à la figure 3 du document EP 1 628 139 du même Demandeur, qui sont incorporés ici par référence.

Pour le procédé de détermination d'une position du récepteur, après avoir mis à zéro toutes les données stockées au préalable dans le contrôleur 9 ou dans le corrélateur 8 ou dans le registre tampon 11, une instruction de départ est ordonnée par les moyens à microprocesseur 12. Au moins un premier canal 7' peut par exemple débuter pour l'acquisition des signaux radiofréquences émis par un satellite géostationnaire SBAS accessible depuis l'endroit où se trouve ledit récepteur. Toutefois plusieurs canaux 7' peuvent être configurés de manière à rechercher en parallèle un même satellite géostationnaire SBAS ou chacun un satellite géostationnaire SBAS différent sans connaissance grossière de l'endroit où se situe ledit récepteur.

Une fois qu'un canal 7' en fonction trouve et poursuit un satellite géostationnaire SBAS, il fournit un signal d'interruption aux moyens à microprocesseur 12. Suite à ce signal d'interruption, les autres canaux peuvent être commandés pour être placés momentanément au repos. Le message SBAS du canal 7' en fonction est transféré aux moyens à microprocesseur par l'intermédiaire du registre tampon correspondant 11. Les moyens à microprocesseur prélèvent les données de temps, de corrections ionosphériques et d'intégrité des satellites du message SBAS, et commandent l'opération de calibrage des oscillateurs commandés numériquement intégrés aux canaux de l'étage de corrélation 7, ou de l'oscillateur du générateur de signaux d'horloge 5.

Cette première étape permet donc de corriger les erreurs dues à l'imprécision de l'oscillateur interne, ou également des erreurs liées aux effets de la ionosphère, qui s'ajoutent aux erreurs dues uniquement à l'effet Doppler. En règle générale, on peut compter jusqu'à un écart de fréquence d'environ ± 7,5 kHz. Ces erreurs peuvent bien entendu être corrigées dans la boucle de code et dans la boucle de la porteuse du corrélateur du canal en fonction lors de la phase d'acquisition et de poursuite.

Dans une seconde étape, les moyens à microprocesseur 12 configurent plusieurs canaux 7' de l'étage de corrélation 7 pour la recherche en parallèle d'autres satellites notamment du type GPS. Une fois qu'au moins trois autres satellites GPS en plus du satellite géostationnaire SBAS sont trouvés et poursuivis, un message GPS de chaque canal est transféré aux moyens à microprocesseur 12 afin de lui permettre de rapidement calculer la position du récepteur. Grâce à la réception initiale du message SBAS, pour adapter certaines parties du récepteur, la seconde étape peut se dérouler beaucoup plus rapidement, que dans le cas où uniquement des satellites GPS sont cherchés dès la mise en fonction du récepteur. Le procédé de détermination d'une position selon l'invention permet ainsi de réduire le temps de détermination de la position du récepteur, et donc de réduire la consommation en énergie.

Bien entendu pour le procédé de détermination de position, il peut aussi être imaginé de configurer tous les canaux 7' de l'étage de corrélation pour rechercher soit un même satellite géostationnaire ou plusieurs satellites géostationnaires SBAS. Une fois les messages SBAS tirés d'au moins certains canaux, tous les canaux 7' sont configurés pour la recherche et la poursuite d'autres satellites, notamment du type GPS.

En plus de la réduction de consommation constatée par le procédé de détermination d'une position selon l'invention et avec la répartition des tâches logicielles dans l'étage de corrélation, une réduction de consommation supplémentaire peut être accomplie en coupant par période de temps volontairement l'étage RF des moyens de réception et de mise en forme des signaux 3. Cette coupure est opérée tout en gardant actif les opérations de génération de la réplique du code dans l'étage de corrélation.

A partir de la description qui vient d'être faite, plusieurs variantes du procédé de détermination de position du récepteur de signaux radiofréquences, ainsi que du récepteur pour sa mise en oeuvre peuvent être conçues par l'homme du métier sans sortir du cadre de l'invention définie par les revendications. Il peut être prévu de ne configurer pour la recherche de satellites géostationnaires qu'un groupe parmi les N canaux de l'étage de corrélation, alors que les autres canaux peuvent être configurés pour la recherche de satellites du type GPS. Des paramètres relatifs aux satellites GPS et SBAS peuvent être mémorisés dans les moyens à microprocesseur.

## Revendications

1. Procédé de détermination d'une position d'un récepteur de signaux radiofréquences (1), le récepteur comprenant des moyens de réception et de mise en forme des signaux radiofréquences (3) provenant de satellites pour produire des signaux intermédiaires (IF) convertis en fréquence, un étage de corrélation (7) composé de N canaux de corrélation (7') pour recevoir les signaux intermédiaires afin de les corréler avec des répliques de la fréquence porteuse et de codes spécifiques de satellites à chercher et à poursuivre, et des moyens à microprocesseur (12) reliés à l'étage de corrélation pour traiter les données tirées, après corrélation, des signaux radiofréquences,
le procédé étant **caractérisé en ce qu'**il comprend, dès la mise en fonction du récepteur, des étapes consistant dans l'ordre à :
- configurer au moins un canal de l'étage de corrélation pour la recherche d'un satellite géostationnaire visible du type SBAS,
- dès qu'un satellite géostationnaire visible a été détecté et poursuivi, fournir une consigne pour calibrer la fréquence de signaux de cadencement fournis par des oscillateurs commandés numériquement intégrés aux canaux de l'étage de corrélation, ou calibrer des signaux d'horloge (CLK, CLK16) produits par un générateur de signaux d'horloge (5), sur la base de données temporelles tirées d'un message de données SBAS, pour le cadencement des opérations dans le récepteur, et
- configurer plusieurs canaux pour la recherche et la poursuite en parallèle d'autres satellites visibles pour réaliser les opérations de calcul de la position et du temps dans les moyens à microprocesseur.

2. Procédé selon la revendication 1, pour lequel le récepteur (1) est susceptible de capter des signaux radiofréquences de satellites du type GPS et géostationnaires du type SBAS, **caractérisé en ce que** dès qu'au moins un message SBAS d'un satellite géostationnaire acquis par un canal en fonction (7') de l'étage de corrélation (7) est transmis aux moyens à microprocesseur (12), et que la fréquence des signaux de cadencement ou des signaux d'horloge a été calibrée, tous les canaux (7') sont configurés par des paramètres de configuration fournis par les moyens à microprocesseur (12) afin de chercher indépendamment ou par groupe en parallèle plusieurs satellites du type GPS visibles.

3. Procédé selon l'une des revendications précédentes, **caractérisé en ce que** dès la mise en fonction du récepteur (1), plusieurs canaux (7') de l'étage de corrélation (7) sont configurés pour rechercher chacun un satellite géostationnaire respectif sur la base de paramètres de configuration fournis par les moyens à microprocesseur (12).

4. Procédé selon l'une des revendications 1 et 2, **caractérisé en ce que** dès la mise en fonction du récepteur (1), tous les canaux (7') de l'étage de corrélation (7) sont configurés pour rechercher un même satellite géostationnaire sur la base de paramètres de configuration fournis par les moyens à microprocesseur (12).

5. Procédé selon l'une des revendications précédentes, pour lequel le nombre N de canaux (7') de l'étage de corrélation (7) est égal à 12, **caractérisé en ce qu'**uniquement 2 canaux (7') sont configurés pour rechercher soit un même satellite géostationnaire, soit chacun un satellite géostationnaire respectif, et **en ce qu'**après la fourniture de la consigne de calibrage des oscillateurs commandés numériquement ou l'opération de calibrage du générateur de signaux d'horloge, les 10 autres canaux sont prévus pour être configurés pour la recherche de satellites du type GPS.

6. Procédé selon l'une des revendications précédentes, pour lequel chaque canal (7') de l'étage de corrélation (7) comprend un corrélateur (8) et un contrôleur (9) associé au corrélateur, ledit contrôleur comprenant un algorithme de traitement de signaux numériques pour permettre lors de la mise en fonction du canal (7') d'opérer de manière autonome toutes les tâches de synchronisation pour la recherche et la poursuite d'un satellite, **caractérisé en ce que** les canaux mis en fonction et configurés pour la recherche de satellites fournissent aux moyens à microprocesseur (12) des données d'un message d'un satellite géostationnaire SBAS ou des données d'un messages d'un satellite du type GPS acquis, à une fréquence inférieure ou égale à 250 Hz pour que les moyens à microprocesseur ne s'occupent que des tâches de calcul de la position et du temps sans intervention au niveau des tâches de synchronisation et de corrélation effectuées dans chaque canal en fonction.

7. Récepteur de signaux radiofréquences convenant à la mise en oeuvre du procédé de détermination de position selon l'une des revendications précédentes, le récepteur comprenant des moyens de réception et de mise en forme des signaux radiofréquences (3) provenant de satellites pour produire des signaux intermédiaires (IF) convertis en fréquence, un étage de corrélation (7) composé de N canaux de corrélation (7') pour recevoir les signaux intermédiaires afin de les corréler avec des répliques de la fréquence porteuse et de codes spécifiques de satellites à chercher et à poursuivre, et des moyens à microprocesseur (12) reliés à l'étage de corrélation pour traiter les données tirées, après corrélation, des signaux radiofréquences, **caractérisé en ce qu'**au moins un canal (7') de l'étage de corrélation est configuré par des paramètres fournis par les moyens à microprocesseur pour la recherche d'un satellite géostationnaire SBAS, et **en ce que** les moyens à microprocesseur (12) sont agencés pour fournir une consigne de calibrage de la fréquence de signaux de cadencement fournis par des oscillateurs commandés numériquement intégrés aux canaux de l'étage de corrélation, ou pour calibrer la fréquence des signaux d'horloge (CLK, CLK16) produits par un générateur de signaux d'horloge (5), sur la base de données temporelles tirées d'un message de données SBAS, pour le cadencement des opérations dans le récepteur.

8. Récepteur de signaux radiofréquences selon la revendication 7, **caractérisé en ce que** chaque canal (7') de l'étage de corrélation (7) comprend un corrélateur (8) et un contrôleur (9) associé au corrélateur, ledit contrôleur comprenant un algorithme de traitement de signaux numériques pour permettre lors de la mise en fonction du canal correspondant (7') d'opérer de manière autonome toutes les tâches de synchronisation pour la recherche et la poursuite d'un satellite géostationnaire ou d'un satellite du type GPS.

9. Récepteur de signaux radiofréquences selon la revendication 8, **caractérisé en ce que** chaque corrélateur (8) comprend un premier oscillateur commandé numériquement dans une boucle d'asservissement de la fréquence porteuse, et un second oscillateur commandé numériquement dans une boucle d'asservissement du code PRN spécifique d'un satellite à poursuivre, chaque oscillateur commandé numériquement étant calibré en fréquence sur la base d'une consigne de calibrage fournie dans un registre (11) par les moyens à microprocesseur.

10. Récepteur de signaux radiofréquences selon la revendication 7, **caractérisé en ce que** le générateur de signaux d'horloge (5) comprend un oscillateur à quartz, dans lequel au moins un condensateur à capacité variable est relié à un résonateur à quartz de manière à modifier la fréquence des signaux d'horloge en fonction de la valeur capacitive dudit condensateur calibrée par les moyens à microprocesseur (12) sur la base de données temporelles d'un satellite géostationnaire capté.

11. Récepteur de signaux radiofréquences selon la revendication 7, **caractérisé en ce qu'**il comprend 2 canaux configurables pour la recherche de satellites géostationnaires et 10 autres canaux configurables pour la recherche de satellites du type GPS, le nombre N de canaux étant égal à 12.
